# EUROPEAN PATENT APPLICATION

(11) **EP 4 718 895 A1**
(43) Date of publication of application: **01.04.2026**
(21) Application number: 24203252.2
(22) Date of filing: 27.09.2024
(51) Int. Cl.: H04W 8/18, H04W 8/20

(54) **METHOD AND DEVICE FOR MANAGING PROFILES IN AN ESIM**

(71) Applicant: IDEMIA France, 92400 Courbevoie (FR)
(72) Inventor: MACUDA, Jacek, 92400 Courbevoie (FR); UGLIETTI, Gianni, 92400 Courbevoie (FR); DUMOULIN, Jérôme, 92400 Courbevoie (FR)
(74) Representative: Santarelli

(57) **Abstract**

The device (130) for managing profiles in an eUICC-enabled SIM (eSIM) card (150) has the ability to run over-the-air (OTA) provisioning of multiple network operator (MNO) profiles from a central management point CMP (11), and is configured to simultaneously use multiple enabled profiles (MEP).

The eUICC is configured to manage two types of profiles, profiles controlled by the CMP, and user-API controlled profiles, the eSIM card storing said profiles in a profile memory, wherein a profile property and/or a profile position in the profile memory represents the profile type.

The eUICC has a unique Issuer Security Domain Root (ISD-R 160) configured to receive profile management commands for both types of profiles through:
- a first logical secure interface (45) dedicated to user-API controlled profiles, to provide first management commands dedicated to user-API controlled profiles to the ISD-R, or
- a second logical secure interface (46) dedicated to CMP controlled profiles, to provide second management commands dedicated to CMP controlled profiles to the ISD-R.

## Description

### FIELD OF THE INVENTION

The present invention relates to the management of different types of profiles in an eSIM (embedded SIM). More particularly the different types of profiles comprise profiles controlled by a central management point (CMP), and user profiles controlled by a user application programming interface (API).

The present invention applies, in particular, to the field of mobile network devices (cell phones, tablets, portable computers, security controllers, medical devices, automotive, etc.) and particularly to provisioning, i.e., loading, storing and installing profiles into embedded Universal Integrated Circuit Cards (eUICCs) and to editing, e.g., enabling, disabling or deleting, updating, auditing, renaming, ..., such installed profiles.

### TECHNOLOGICAL BACKGROUND

A Mobile Network Operator ("MNO") is a company that provides access to cellular networks to subscribers. Also known as a cellular carrier, wireless service provider, cellular company, and other combinations of these terms, an MNO provides cellular services in a specific geographical area, which can overlap with other MNOs' specific geographical area.

While MNOs each have their own networks, the network classifications are standardized by a third-party organization (typically 3GPP) so that people and devices can know the types of services they can expect from an MNO. For example, 5G is the fifth generation of cellular networks, and for an MNO to market 5G service, it must have all the underlying infrastructure that makes a network "5G."

Consumers and Internet of Things (IoT) manufacturers used to sign a contract with a single MNO, and when their cellular device travels outside the MNOs home country, the operator typically connects them to a partner MNO that serves that region and may charge "roaming" fees. For loT manufacturers, working directly with MNOs can therefore make deployments of loT devices both more complicated and more expensive.

One of the reasons cellular connectivity is so appealing to loT manufacturers is because it offers exceptional coverage and mobility. But loT applications sometimes require devices to work across borders. An loT manufacturer wants to deploy wherever its market is and not just where a partner MNO has coverage. This can mean agreeing to multiple contracts, creating multiple SKUs (Stock Keeping Units) for a single loT device, and paying excessive fees when the customers roam beyond the partner MNOs' home network.

MNOs built their network infrastructure for cell phones. And while loT devices may use many of the same services, most loT applications use cellular connectivity in very different ways than consumers use their mobile phones.

Modern loT manufacturers often want to deploy globally. Traditional cellular connectivity allows their devices to connect to networks in multiple countries, but every MNO has a limited list of carriers they have partnerships with, and these devices can't connect to networks that aren't on this list. To connect to a wider range of cellular networks, loT manufacturers need specialized components on their Subscriber Identity Modules (SIMs).

First SIM (Subscriber Identification Module) cards had a Universal Integrated Circuit Card (UICC), which stored a single profile locked to a specific carrier. When activated, that SIM cards only worked with that carrier's "home" network and their partner networks.

An embedded UICC (e-UICC) allows the SIM card to store multiple subscriber profiles, so operators can provision the SIM Over-the-Air (OTA) and enable the device to connect to a list of networks. However, an eUlCC still only comes loaded with one profile, and integrating new MNO profiles to said eUICC can cost tens of thousands of dollars. So eUICCs are more effective as a safeguard in case your carrier goes bankrupt, or you want to deploy in a country that requires a local operator.

eSIM (embedded SIM) is an embedded alternative of the traditional physical SIM cards, providing the same usability, privacy, and security, but also minimizing some disadvantages of the traditional SIM cards.

The fifth generation standard for broadcasting cellular networks ("5G") aims to address several of the existing shortcomings and at easing operations and overall support of User Equipments (UEs). It was designed to support a new set of requirements, such as increased data rates for high-speed mobility, support for low data rate, low power devices, and robust and strong network security.

Specifically, in the scope of Internet of Things (IoT), it includes use cases aligned with loT connectivity, which have different requirements from typical end-user connectivity. Additionally, it also aims to eliminate the need for Subscriber Identity Module (SIM) cards by use of virtual embedded SIM (eSIM), and the notion of "Profiles". Unlike traditional SIM cards that can be removed and replaced with new devices, eSIMs are permanently integrated into a device. Smaller than standard nano SIMs, they can fit into small devices, an additional advantage for loT devices. eSIM is a SIM that is soldered directly into the device, and it allows the separation of the operators' Profile and the physical chipset. The trend is for it to be further merged with devices, becoming a section of silicon in the System on Chip (SOC) or even functionality in an enclave.

The evolution of the physical SIM to an eSIM is represented by the separation between the physical integrated circuit and the operator's Profile, which stores configurations and keys. Devices can be produced with an integrated eSIM that has no operator Profile, or have an initial Profile that can be modified at a later stage. Unlike the traditional SIM, and depending on several conditions (e.g., the user's location), new Mobile Network Operator (MNO) profiles or Mobile Virtual Network Operator (MVNO) profiles could be downloaded over the Internet. Most importantly, the process can be developed remotely and without physical interaction with a user, which is critical for loT deployments. To achieve this, provisioning and downloading processes are standardized in a way that ensures integrity, security, and interoperability.

There are several possible approaches to achieve this. For these simple reasons, eSIM is considerably more flexible than a physical SIM, allowing rapid provisioning and reprovisioning of devices, even if installed in the field. The device can have a default profile, and new profiles can be downloaded through a process called Remote SIM Provisioning (RSP), wherein the profiles contain the same data that normally would have been put in a regular SIM card.

With an eSIM, the user still needs a contract with the operator, but instead of getting a physical card, the user receives an activation code. With it, the user can download a profile ready to be installed on the device, after which the device can connect to the network. Flexibility is thus greatly increased as operators may provision cards instantly and on-demand, without any physical collateral. From the perspective of loT deployments, eSIM solutions have been proposed in the loT domain to facilitate secure machine-to-machine (M2M) communication between devices.

In the scope of 5G, Authentication and Authorization Controller (AAC) mechanisms in eSIMs are based on the Authentication and Key Agreement (AKA) protocol, which aims to achieve mutual authentication between an UE (User Equipment) and the operator, establishing keys to protect subsequent communications.

In the automotive sector, the number of connected and autonomous vehicles is increasing as well as the Vehicle-to-Everything (V2X) communication ecosystem. Consequently, the automotive vertical market is growing. Vehicles can exchange information with each other, with roadside infrastructure, or with servers anywhere on the Internet, with different levels of criticality.

Use cases of connected vehicles include mobility management, vehicle management, safety, entertainment, driver assistance, driver well-being. To maintain the user updated about environmental conditions it is necessary to have real-time traffic information, fuel consumption data, and, a functional system that alerts the user for external hazard alerts (including the possibility to make an emergency call (eCall) on accident). Moreover, most scenarios required some level of driver assistance such as autonomous driving, parking assistance, and well-being such as fatigue detection.

eSIM can guarantee the authentication process, secure identification, and operator flexibility for resilient operation. eSIMs also provides eCall functionality, allowing the vehicle to automatically call the nearest emergency center in case of an accident. As eSIM provides a significant amount of value across the entire automotive value chain from manufacturers and service providers to fleet managers and end-users, everyone benefits from a more seamless operation reinforcing their relationship with the vehicle and their bond to the brand.

While flexible connectivity is essential to the good work of this kind of system, ultra-reliable network connectivity is a critical success factor for autonomous cars. In this aspect, operational flexibility and support for slices are an important benefit. Moreover, the brands can customize the AAC processes towards greater security.

In automotive scenarios, it is also needed to consider the privacy problems. Connected vehicles collect and communicate a huge amount of data, particularly regarding a user's location and behavior. Data stored on the vehicle and exchanged over the network must be kept safe. It must be established who can access the data, when can the data be accessed and what are the scopes. A transparent control flow is needed to ensure that the data owner knows at every time what is done with his/her data, who accesses the data, and who can see the data.

Finally, during the life period of the car, it will be required to perform several MNO profile changes, software, firmware, and application updates and upgrades as better connectivity contracts are negotiated, or as the vehicle is resold in the aftermarket. Again, the eSIM provides the framework for all these operations over the lifetime of the vehicle, allowing it to follow market trends and operator offers, without requiring vehicle down-time, which is a burden to customers and an additional cost for car manufacturers.

Some Automotive OEMs (standing for "Original Equipment Manufacturers") aimed to let end-users add vehicles into their MNO contracts. This is realized with two separated cellular modems (or a costly DSDA, or Dual SIM Dual Active, modem) and two separate eSIMs: eSIM M2M is used for telematics and eSIM Consumer is used to install the profile of an end-user.

Latest's Consumer eSIM specification Phase 3 (see section 2.12) defined a method to enable more than one profile at the same time, which looks interesting given the Automotive OEM use case described above. An MEP (standing for "Multiple Enabled Profiles") capable device is a device where more than one enabled profile can be used in parallel on the same eUICC. However, Consumer eSIMs cannot be managed remotely, so the end-user has full control of the eSIM and OEM cannot trigger profile download OTA.

However, even eSIM loT (recently published) is intended only for remote management of profiles. There is no solution that allows OEM to mix both use cases: manage profiles on the eSIM and at the same time let end-users install their own profiles.

### SUBJECT OF THE INVENTION

The present invention aims to remedy all or part of the disadvantages of the prior art.

According to a first aspect, the present invention is aimed at a device for managing profiles in an eUICC-enabled SIM (eSIM) card having the ability to run over-the-air (OTA) provisioning of multiple network operator profiles from a central management point (CMP), including an eSIM Remote Manager (elM) and/or a Subscription Manager Data Preparation enhanced (SM-DP+), and being configured to simultaneously use multiple enabled profiles (MEP).

The eUICC is configured to manage two types of profiles, OEM or loT profiles controlled by the CMP, and user-API controlled profiles controlled by a user through a local user-API, the eSIM card storing said profiles in a profile memory, wherein a profile property and/or a profile position in the profile memory represents the profile type.

The eUICC has a unique ISD-R (Issuer Security Domain Root) configured to receive profile management commands for both types of profiles through:
- a first logical secure interface (LSI) dedicated to user-API controlled profiles, said first LSI being configured to identify a user-API controlled profile based on said user-API controlled profile property and/or said user-API controlled profile position in the profile memory, to provide first management commands dedicated to user-API controlled profiles to the ISD-R, or
- a second logical secure interface (LSI) dedicated to CMP controlled profiles, said second LSI being configured to identify a CMP controlled profile based on said CMP controlled profile property and/or said CMP controlled profile position in the profile memory, to provide second management commands dedicated to CMP controlled profiles to the ISD-R.

The ISD-R is configured to execute first management commands only on user-API controlled profiles and second management commands, different from the first management commands, only on CMP controlled profiles.

The present invention enables OEMs to manage their CMP controlled profiles and let the end-users install their own user-API controlled profiles using the same eSIM. Those profiles are managed by two separate entities: CMP controlled profiles through a remote server, and user-API controlled profiles through a local interface. Moreover, the different types of profiles are differently identified in the eSIM profile memory, either by their profile property and/or by their profile position in the profile memory. The end-user cannot edit a CMP controlled profile and the CMP cannot edit a user-API controlled profile. The proposed eSIM with embedded user-API controlled profile provisioning enables OEMs to address both use cases in the automotive industry, i.e., telematics and in-car infotainment. Having just one eSIM helps OEMs to save hardware (HW) cost and minimize printed circuit board (PCB) footprint. The profile property is, for example, a profile attribute identifying the type of profile. The profile position is, for example, relating to one of two databases, each dedicated to one of the types of profiles or a partition of the profile memory.

In particular embodiments, the ISD-R is further configured to execute third management commands, different from the first management commands and different from the second management commands, on both user-API controlled profiles and CMP-controlled profiles.

In particular embodiments, the third commands comprise a specific indicator not comprised in the first management commands or in the second management commands, said third commands being sent by an eSIM Remote Manager (elM) to the ISD-R.

In particular embodiments, the device according to the present invention further comprises a security mechanism configured to protect the third management commands. This security mechanism may use a personal identification number (PIN), ciphering or authentication means.

In particular embodiments, the eUICC further comprises an Internet of Things (IoT) Profile Assistant (IPA) that is configured to identify a first management command from a local API and a second management command from the central management point.

In particular embodiments, the IPA is embedded in the card (IPAe) and is configured to identify the first management commands or the second management commands based on different transport channels associated with the local API or the central management point.

Commands sent to the IPAe may be received via two different transport channels (local ISO command for consumer, and Over the Air for OEM). The eUICC Operating System OS_{eUICC} can give visibility to the IPAe on this transport channel through a context variable. The IPAe can therefore perform executions of those commands according to this context variable. For profile loading, loading is performed through a Subscription Manager Data Preparation enhanced (SM-DP+), regardless of the initial command origin. Therefore, to be able to assign the right property (CMP controlled type or user API controlled type) to the downloaded profile, the eUICC Operating system OS_{eUICC} (for example via ISD-R) stores the initial context variable and assign accordingly the property to the downloaded profile.

In particular embodiments, the IPA is implemented in the device (IPAd) and is configured to identify the first management commands or the second management commands based on different transport channels associated with the local interface or the central management point.

Similarly, IPAd receives commands locally or over the air. According to the command transmission channel, IPAd communicates with the ISD-R on the LSI for user-API controlled profile provisioning or the LSI for the CMP controlled profile provisioning. As for IPAe, the context for profile download is stores by the eUICC Operating System OS_{eUICC} (for example via ISD-R).

In particular embodiments, the eUICC is configured to let the user edit a user-API controlled profile through the user API.

In particular embodiments, the IPA is configured to notify the CMP of at least one of the following edition actions performed on a user-API controlled profile: activation, deactivation, deletion or updating.

In particular embodiments, at least one edition action is performed on a user-API controlled profile, after reception of a message from the CMP by the IPA.

In particular embodiments, said message follows a request sent by the IPA to the CMP asking if a management action is to be performed on said user-API controlled profile.

In particular embodiments, the eUICC is configured to use an embedded ES9+ interface to provide a secure transport for the delivery of a Bound Profile Package between a Subscription Manager Data Preparation enhanced (SM-DP+) and the IPA. This ES9+ interface is defined in SGP.21 architecture specification.

In particular embodiments, the eUICC comprises an embedded user API configured to let the user provide an activation code associated with a private subscription.

In particular embodiments, the eUICC is provided with an endpoint function with Constrained Application Protocol (Coap) support for elM-IPA (ESipa) interface or HyperText Transfer Protocol secure (HTTPs) support for elM-IPA communication.

In particular embodiments, the profile memory is partitioned into two databases, a first database for CMP controlled profiles and a second database for user-API controlled profiles.

In particular embodiments, the profile memory is configured to store, with each profile, an attribute indicating whether said profile is a user-API controlled profile or a CMP controlled profile.

According to a second aspect, the present invention is aimed at a method for managing profiles in an eUICC-enabled SIM (eSIM) card having the ability to run over-the-air (OTA) provisioning of multiple network operator profiles from a central management point (CMP) including an eSIM Remote Manager (elM) and/or a Subscription Manager Data Preparation enhanced (SM-DP+), and being configured to simultaneously use multiple enabled profiles (MEP), that comprises:
- steps in which the eUICC manages CMP controlled profiles provisioned by the central management point,
- steps in which the eUICC manages user-API controlled profiles controlled by a user through a local user-API,

the eSIM card storing said profiles in a profile memory, wherein a profile property and/or a profile position in the profile memory represents the profile type;
wherein the eUICC has a unique ISD-R that receives profile management commands for both types of profiles through:
   - a first logical secure interface (LSI) dedicated to user-API controlled profiles, said first LSI being configured to identify a user-API controlled profile based on said user-API controlled profile property and/or said user-API controlled profile position in the profile memory, to provide first management commands dedicated to user-API controlled profiles to the ISD-R, or
   - a second logical secure interface (LSI) dedicated to CMP controlled profiles, said second LSI being configured to identify a CMP controlled profile based on said CMP controlled profile property and/or said CMP controlled profile position in the profile memory, to provide second management commands dedicated to CMP controlled profiles to the ISD-R;
wherein the ISD-R executes first management commands only on user-API controlled profiles and second management commands, different from the first management commands, only on CMP controlled profiles.

This method having similar advantages and particular features to the device according to the first aspect of the invention, they are not reproduced here.

In particular embodiments, the ISD-R further executes third management commands, different from the first management commands and different from the second management commands, on both user-API controlled profiles and CMP controlled profiles.

In particular embodiments, an eSIM Remote Manager (elM) sends third commands to the ISD-R, said third commands comprising a specific indicator not comprised in the first management commands or in the second management commands.

### BRIEF DESCRIPTION OF THE DRAWINGS

Further advantages, purposes and particular features of the invention will be apparent from the following non-limiting description of at least one particular embodiment of the method and devices which are the subject of the present invention, with reference to the enclosed drawings, in which:
- Figure 1 shows, schematically, a first system architecture for profile management in a device comprising an eUICC,
- Figure 2 illustrates, schematically, a second system architecture for profile management,
- Figure 3 illustrates, schematically, a third system architecture for profile management,
- Figure 4 is a first succession of steps performed by components shown in Figure 1 to 3,
- Figure 5 is a second succession of steps performed by components shown in Figures 1 to 3,
- Figure 6 is a third succession of steps performed by components shown in Figures 1 to 3,
- Figure 7 is a fourth succession of steps performed by components shown in Figures 1 to 3, and
- Figure 8 is a fifth succession of steps performed by components shown in Figures 1 to 3.

### DETAILED DESCRIPTION OF EMBODIMENTS

The present description is given by way of non-limitation, each feature of one embodiment being capable of being combined with any other feature of any other embodiment in an advantageous manner. It is noted at the outset that the figures are not to scale.

As will be appreciated from the present description, various inventive concepts may be implemented by one or more of the methods or devices described below, several examples of which are provided herein. The actions or steps carried out in carrying out the method or device may be ordered in any suitable manner. Accordingly, it is possible to construct embodiments in which the actions or steps are performed in an order different from that illustrated, which may include performing certain acts simultaneously, even if they are presented as sequential acts in the illustrated embodiments.

The expression "and/or", as used herein and in the claims, is to be understood to mean "either or both" of the elements so conjoined, i.e., elements that are present conjunctively in some cases and disjunctively in other cases. Multiple elements listed with 'and/or' are to be interpreted in the same way, i.e., `one or more' of the elements so joined. Other elements may possibly be present, other than the elements specifically identified by the "and/or" clause, whether or not they are related to those specifically identified elements. Thus, by way of non-limiting example, a reference to "A and/or B", when used in conjunction with an open-ended language such as "comprising" may refer, in one embodiment, to A only (possibly including elements other than B); in another embodiment, to B only (possibly including elements other than A); in yet another embodiment, to both A and B (possibly including other elements); etc.

As used in this description and in the claims, the expression "at least one", in reference to a list of one or more elements, is to be understood to mean at least one element selected from one or more elements in the list of elements, but not necessarily including at least one of each specifically enumerated element in the list of elements and not excluding any combination of elements in the list of elements. This definition also allows for the optional presence of elements other than the specifically identified elements in the list of elements to which the phrase "at least one" refers, whether or not they are related to those specifically identified elements. Thus, by way of non-limiting example, "at least one of A and B" (or, equivalently, "at least one of A or B", or, equivalently, "at least one of A and/or B") may refer, in one embodiment, to at least one, possibly including more than one, A, with no B present (and possibly including elements other than B); in another embodiment, to at least one, optionally including more than one, B, without A present (and optionally including elements other than A); in yet another embodiment, to at least one, optionally including more than one, A, and at least one, optionally including more than one, B (and optionally including other elements); etc.

In the claims, as well as in the description below, all transitional expressions such as "comprising", "including", "carrying", "having", "containing", "involving", "holding", "composed of', and the like, are to be understood as being open-ended, i.e., as meaning including, but not limited to. Only the transitional expressions "consisting of" and "consisting essentially of" are to be understood as closed or semi-closed transitional expressions, respectively.

In the description, the term "server" is often omitted for clarity purposes. For example, "MNO" refers to both the MNO itself and the MNO server. The same is true for "SM-DP+", "SM-SR", "elM", etc.

The present invention is concerned with the management of secure chips such as eUICCs, and in particular with the management of subscriber profiles in such eUICCs. In the present specification, profile management consists in profile provisioning, i.e., loading and storing a profile into an eUICC and installing said profile, and in profile edition, comprising activation, deactivation, deletion, updating, renaming, auditing actions and other actions performed on the profile after it is installed, as known by the person skilled in the art.

A secure element, referred to as SE, is a tamper-resistant hardware component or platform (typically a chip) used in a host terminal and capable of securely hosting applications and data in accordance with security rules and requirements set by trusted authorities.

Among the three form factors of an OS, the UICC defines a physical chip that contains the application that authenticates a user in a mobile network to access services (voice, data, etc.). To this end, it contains applications such as the Universal Subscriber Identity Module (USIM) application that holds the subscriber's identification information and allows authentication in the mobile network.

An eUICC is a UICC chip that is integrated or soldered into a host terminal (or "device"). Mechanisms have been envisaged to securely manage different subscriptions within the same eUICC as described in the SGP.02 specification for M2M mode and SGP.22 for Consumer mode and SGP.32 for loT (Internet of Things) eSIM loT Technical Specification - Version 1.0 - 26 May 2023.

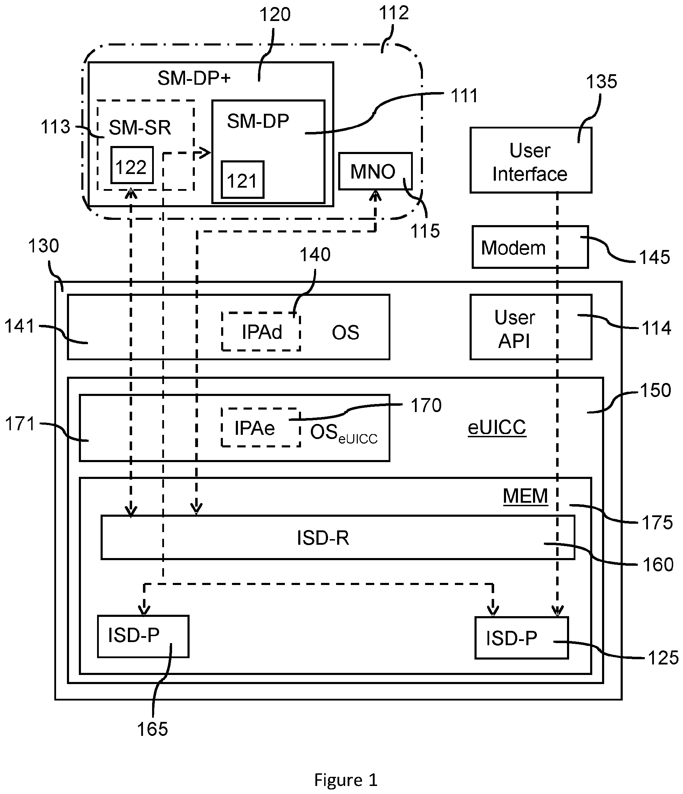

Figure 1 shows schematically a first system structure for profile management according to the present invention in an eUICC 150 integrated with a user host terminal 130, as derived from SGP.22 (Consumer mode). A mobile network 112 is illustrated, corresponding for example to a mobile phone operator MNO. In a known way, several mobile networks can coexist, corresponding to several operators. Thus, several profiles can be loaded on the user terminal 130. It has to be noted that the present invention is also applicable to other mobile network architectures.

The mobile network 112 comprises a secure routing unit SM-SR 113 of a subscription management server SM (not shown for better readability), a data preparation unit SM-DP 111 of the same subscription management server SM and servers 115 specific to the MNO managing this mobile network. The well-known main functions of these units/servers are described below. The SM-SR and SM-DP+ servers 113 and 111 consist in a Central Management point (CMP). Although the SM-SR and SM-DP+ servers 113 and 111 are shown separately, they are preferably implemented within the same SM-DP+ server 120.

A SM-DP+ server 120 comprises, in simplified form, a profile package binding function 121 and a profile package delivery function 122. In the case of a SM-DP server 111 accompanied by a different SM-SR server 113, the profile package delivery function 122 is performed by the SM-SR server 113.

A user terminal 130, e.g., an loT device, a mobile phone, a smartphone, a computer, a tablet, a car device, etc., includes an eUICC card 150 for securely accessing services of the mobile network 112.

In Figure 1, only a user terminal 130 carrying an eUICC card 150 is shown. Of course, the mobile network generally includes a plurality of such mobile terminals equipped with eUICC (or SIM, UICC) cards. The present description focuses on eUICC cards by way of example. Generally speaking, the present invention can be implemented in any type of secure element (SE) containing a plurality of subscriber profiles, for example embedded secure elements, or "eSE".

The user terminal 130 comprises an operating system OS 141 capable of controlling a communication interface (not shown) with the mobile network 112 and capable of interfacing this communication interface with the eUICC 150, as well as a user interface (e.g., a short-distance communication device using WiFi or Bluetooth protocols, a keyboard, a screen) 135 allowing a user (in particular in the Consumer mode) to interact with the user terminal.

In an embodiment relating to the Consumer mode, the OS 141 includes a local profile assistant, LPA, providing profile management services. For example, these services (not shown) may include a Local Discovery Service (LDS) to find out the profiles present in the eUICC 150 and their active or inactive status, a Local Profile Download (LPD) service to perform the sequential operations of editing a profile and a Local User Interface (LUI) service to retrieve/acquire the profile edition actions initiated locally by the user through a user API.

In the embodiment shown in Figure 1, the local profile assistant LPA is an loT Profile Assistant (IPA). It comprises either an loT Profile Assistant located in the loT Device (IPAd) 140 or an loT Profile Assistant located in the eUICC (IPAe) 170 included in an eUICC operating system (OS_{eUICC}) 171.

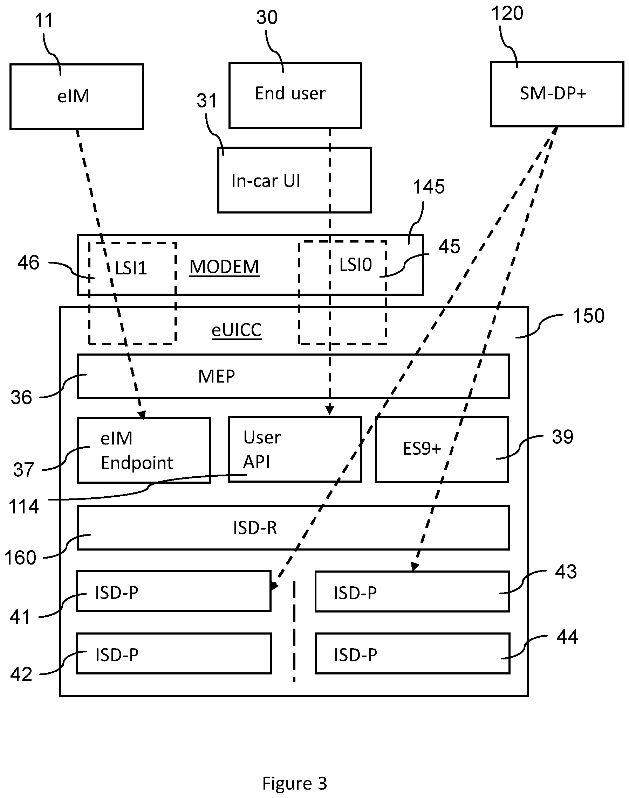

In a preferred embodiment shown in Figure 3, embedded ES9+ functions 39 enable profile downloads from SM-DP+ 120 of both CMP controlled (e.g., loT or OEM) profile type, and user-API controlled type, and avoid the need to implement LPAd or IPAd at the device 130 level.

The eUICC board 150 comprises the eUICC operating system OS_{eUICC} 171 (stored in non-volatile memory such as read-only memory or flash memory) coupled to a non-volatile memory MEM 175. The eUICC operating system 171 implements functions (not shown) in the Telecom framework and for profile management, typically a Profile Package Interpreter and a Profile Policy Enabler. Other classical components present in the eUICC card are not shown here for reasons of clarity: interface (and associated controller) for communication with the host terminal, RAM (Random Access Memory), data bus, processor, etc.

In accordance with the above-mentioned standards, the eUICC 150 card includes, in the non-volatile memory (MEM) 175, several security domains for the management of the eUICC 150 card and of subscriber CMP controlled profiles and user-API controlled profiles, each security domain being identified by a unique AID (Application Identifier):
an embedded UICC Controlling Authority Security Domain ("ECASD", not shown) responsible for the secure storage of credentials required by the eUICC security domains;
an Issuer Security Domain - Root ("ISD-R") 160 defined, at the time of the eUICC manufacturing, as representative of the card owner and therefore accessible (via a particular cryptographic key set) only by the card owner. In the Consumer mode, the ISD-R 160 includes LPA services capable of establishing a dialogue with the IPAd 140 or IPAe 170 assistants;
one or more Issuer Security Domain-Profile (ISD-P) domains 165, each one dedicated to an MNO; ISD-P domain 165 is associated with a service subscription with the corresponding MNO operator and to allow access to it. One of the ISD-Ps 165 may include a default initial profile (known as a "provisioning profile") allowing network connectivity with the SM-SR 113 unit;
one or more Issuer Security Domain-Profile (ISD-P) domains 125 dedicated to a user.

Each ISD-P domain 125 or 165 is a secure container (protected by a set of cryptographic keys in particular) designed to store, in a secure manner, a single subscriber profile. The subscriber profile is identified by a unique ICCID (Integrated Circuit Card Identifier).

An ISD-P, 125 or 165, includes a routine used for downloading and installing the profile in conjunction with the profile package interpreter for decoding and interpreting a profile package to be installed, received on a secure channel (e.g., according to SCP03t). In particular, a profile package complies with the standard: "eUICC Profile Package: Interoperable Format Technical Specification", Version 3.2, referred to as the "TCA specification" (for Trusted Connectivity Alliance).

In a known way, a communication profile includes subscription data, for example an IMSI (International Mobile Subscriber Identity) identifier, cryptographic keys, authentication algorithms and NAA (Network Access Application), and may also include a file system, App applications/applets, and/or predetermined execution rules.

According to the above-mentioned standards, a profile is composed of Profile Components including:
An MNO-SD (Operator Security Domain) containing operator OTA keys to enable the establishment of a secure OTA channel,
Supplementary Security Domains (SSD) and a Security Domain CASD,
Applications/applets (App),
At least one Network Access Application (NAA),
A File system,
Profile metadata including connectivity parameters ("Connec Param") and profile policy rules ("POL1", for example).

This metadata may include an ICCID (Integrated Circuit Card Identifier) which uniquely identifies the profile.

Although a single ISD-P 125 and a single ISD-P 165 are illustrated in Figure 1, the eUICC 150 card may comprise a plurality of ISD-P security domains and thus a plurality of profiles, each of which may be in an active or inactive state. Each profile or corresponding ISD-P is identified by an ICCID.

The root security domain ISD-R 160 is privileged in that it is able to create or delete ISD-P security domains in the non-volatile memory MEM 175, and to activate or deactivate profiles stored in the ISD-P 165 of the eUICC 150.

Embedded User API 114 is used by the device 130 to let the end-user provide profile Activation Code associated with private subscription. User-API 114 also allows the end-user to control provisioning and/or edition of user-API controlled profiles, as shown in Figure 3.

As known from the above-mentioned specifications, the CMP controlled profile management is achieved by the exchange of messages (commands, responses) between the SM-SR 113 (or the SM-DP+ 120) and the ISD-R 160 root domain. The different management functions and commands of the eUICC 150 are defined in these documents, SGP.02 for the M2M mode and SGP.22 for the Consumer mode. The communication between the SM-SR 113 (or the SM-DP+ 120) and the ISD-R 160 can be carried out by use of the http protocol (hypertext transfer protocol, and if secured, https (for http secured) is using) and can be provided and/or protected by the SCP80 (secure channel protocol 80), SCP81 (secure channel protocol 81) or CAT-TP protocol (Card Application Toolkit Transport Protocol), for example.

The secure loading, storing, updating or deletion of profiles in the ISD-P 165 secure domains is achieved after the exchange of messages (commands, responses) between the SM-DP+ 120 and each relevant ISD-P, 125 or 165, secure domain of the eUICC 150. In particular, the SM-DP+ 120 prepares the profile packages to be loaded into the eUICC 150 and then sends them to the relevant ISD-P domain, 125 or 165, via the SM-SR 113 and the ISD-R 160. APDU messages may be used. The communication between the SM-DP+ 120 and the ISD-P, 125 or 165, through the SM-SR 113, can be carried over the http (or https) protocol and be protected by the SCP02 or SCP03 or SCP03t protocol, itself tunneled or encapsulated in the SM-SR 103 to ISD-R 160 link protected by the SCP80, SCP81 or CAT-TP protocol.

In the following description, the phrase "provisioning a profile" means loading, storing and finally installing in a memory a profile that may be activated". The phrase "editing" a profile" means activating, deactivating, deleting, updating, renaming, auditing a profile or other management actions performed on the profile after it is installed, as known by the person skilled in the art.

The following relates to the application of the invention to loading, storing and finally installing (i.e., provisioning) profiles into eUICCs 150.

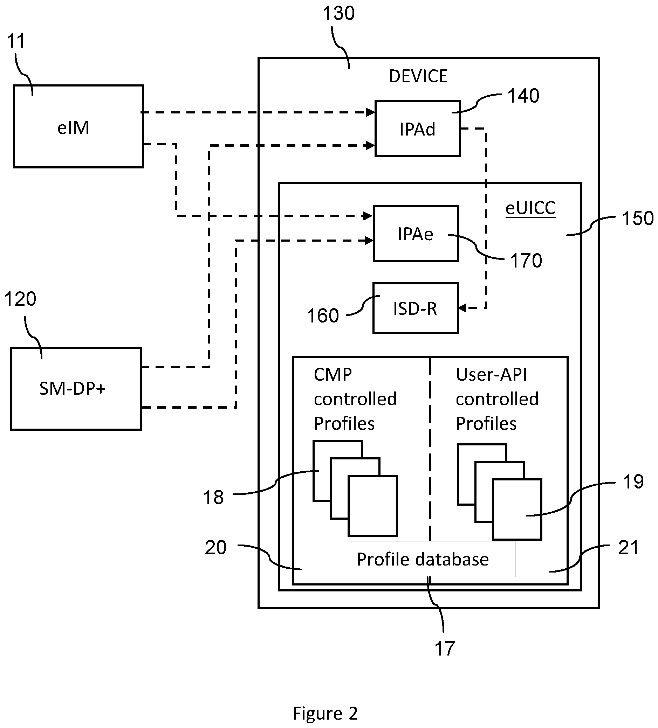

As shown in Figure 2, the system architecture can also be seen as an elM (eSIM loT Remote Manager) server 11 and a SM-DP+ server 120 communicating with a device 130 comprising an eUICC 150. The central management point (CMP) comprises the elM server 11. The device implements an IPAd 140 outside the eUICC 150 or the eUICC 150 implements an IPAe 170. The eUICC 150 implements an ISD-R (issuer security domain - root) 160 and comprises a profile database 17. The profile database 17 is partitioned into a database 20 storing CMP controlled profiles 18 and a database 21 storing user-API controlled profiles 19. The elM server 11 communicates with either the IPAd 140 (when loT Profile Assistant is located into the device) or the IPAe 170 (when loT Profile Assistant is located into the eUICC). Similarly, the SM-DP+ server 120 communicates with either the IPAd 140 or the IPAe 170.

In a particular embodiment of the present invention in the context of a car device, the eUICC 150 may be configured to use an embedded ES9+ interface 39 to provide a secure transport for the delivery of a Bound Profile Package between a SM-DP+ 120 and the IPAe 170. This ES9+ interface is defined in SGP.21 architecture specification. As shown in Figure 3, embedded ES9+ functions 39 enable profile downloads from SM-DP+ 120 of both CMP controlled type and user-API controlled type. Embedded ES9+ functions 39 also avoids the need to implement LPAd or IPAd at the device 130 level.

As shown in Figure 3, on the OEM side, elM 11 communicates with an elM endpoint 37 through LSI1 46 of a modem 145 and MEP (Multiple Enabled Profile) function 36 for eUICC as defined by "Consumer eSIM specification Phase 3". For example, the modem 145 functions according to the Release 17 of 3GPP. An end-user 30 communicates with user API 114 through an in-car user interface 31, LSI0 45 of the modem 145 and MEP function 36. ISD-P 41 to 44 are similar to ISD-P 125 and 165. In embodiments, and as shown in Figure 3, eUICC 150 is provided with an endpoint function 37 with Constrained Application Protocol (Coap) support for elM-IPA (ESipa) interface or HyperText Transfer Protocol secure (HTTPs) support for elM-IPA communication. Endpoint function 37 allowing an entry interface into the eUICC to allow communication between elM and IPA based on dedicated communication protocols for example Coap or HTTPs. Issuer Security Domain - Root ("ISD-R") 160 is defined as the representative of the card owner, as already mentioned previously in the text.

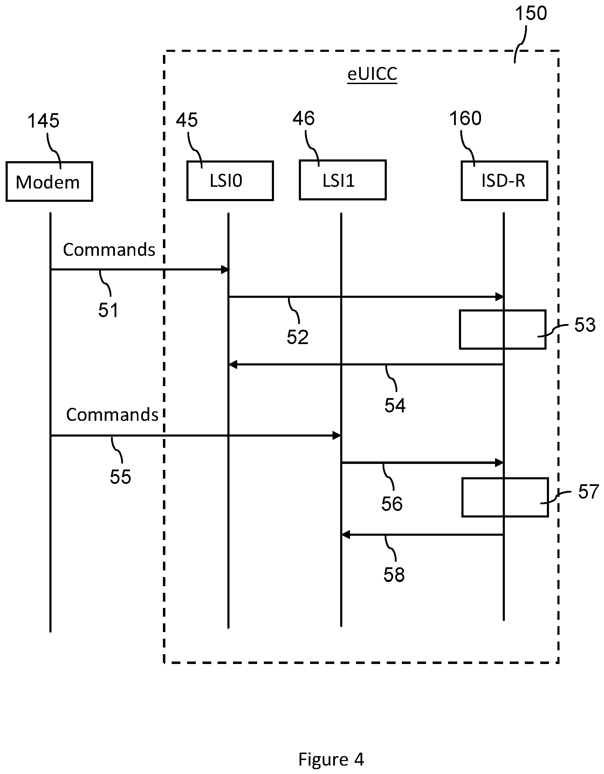

Figure 4 schematically illustrates generic data flow and steps performed by components of the system in order to update or read database 21 storing user-API controlled profiles and to update or read database 20 storing CMP controlled profiles. These components are the modem 145, LSI0 45, LSI1 46 and ISD-R 160. LSI stands for Logical SE Interface. These communication channels are supported by both eUICC 150 and modem 145. LSIs may be seen as logical channels on a physical interface allowing the transfer of data, communication between two entities connected by the physical interface, for example between the modem and the eUICC (e.g., ISD_R). Note that the term LSI is used in ETSI 102221 whereas the term eSIM ports is used for the same purpose in the GSMA specification. The LSI is assigned at profile activation. A profile is assigned to an LSI and a LSI is assigned to a profile. When the profile is deactivated, the assignment is released. The allocation of LSIs is performed by:
- mode 1: LPA with ISD-R reserved LSI 0;
- mode 2: eUICC with ISD-R reserved LSI 1;
- mode 3: Profile selectable on LSI 0 and above, with ISD-R selectable on any of these LSIs.

In a process comprising updating or reading database 21, the modem 145 sends commands 51 to LSI0 45. LSI0 45 is a first logical secure interface (LSI) dedicated to user-API controlled profiles. LSI0 45 is configured to identify a user-API controlled profile based on said profile property and/or said profile position in the profile memory 17, i.e., database 21, to provide first management commands 52 dedicated to user-provisioned profiles to the ISD-R 160. In step 53, ISD-R 160 updates or reads database 21 according to the commands it receives. In step 54, ISD-R 160 sends the status response and/or data related to the execution of the received first management commands to the LSI0 45.

In a process comprising updating or reading database 20, the modem 145 sends commands 55 to LSI1 46. LSI1 46 is a second logical secure interface (LSI) dedicated to CMP controlled profiles. LSI1 46 is configured to identify a CMP controlled profile based on said profile property and/or said profile position in the profile memory 17, i.e., database 20, to provide second management commands 56 dedicated to CMP controlled profiles to the ISD-R 160. In step 57, ISD-R 160 updates or reads database 20 according to the commands it receives. In step 58, ISD-R 160 sends the status response and/or data related to the execution of the received second management commands to the LSI1 46.

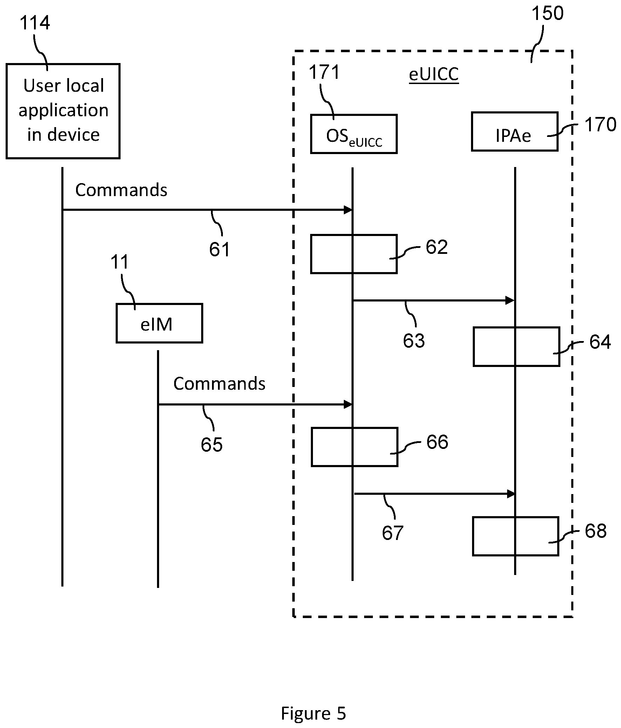

Figure 5 schematically illustrates data flow and steps performed by components of the system in order to perform operations with the database 21 and to perform operations with the database 20. These components are the user local application in device API 114, eSIM loT Remote Manager (elM) 11, eUICC 150 containing the eUICC operating system OS_{eUICC} 171 and the IPAe (Internet of things Profile Assistant implemented in the card, e.g., eUICC 150) 170.

In a process comprising performing operations with the database 21, the API 114 sends commands 61 to OS_{eUICC} 171. In step 62, OS_{eUICC} 171 updates the value of the context variable with a local context variable value and sends commands 63 to the IPAe 170. IPAe 170 performs the operations described in the commands 63 with the database 21 in step 64.

In a process comprising performing operations with the database 20, the elM 11 sends commands 65 to OS_{eUICC} 171. In step 66, OS_{eUICC} 171 updates the value of the context variable with an elM context variable value and sends commands 67 to IPAe 170. IPAe 170 performs the operations described in the commands 67 with the database 20 in step 68.

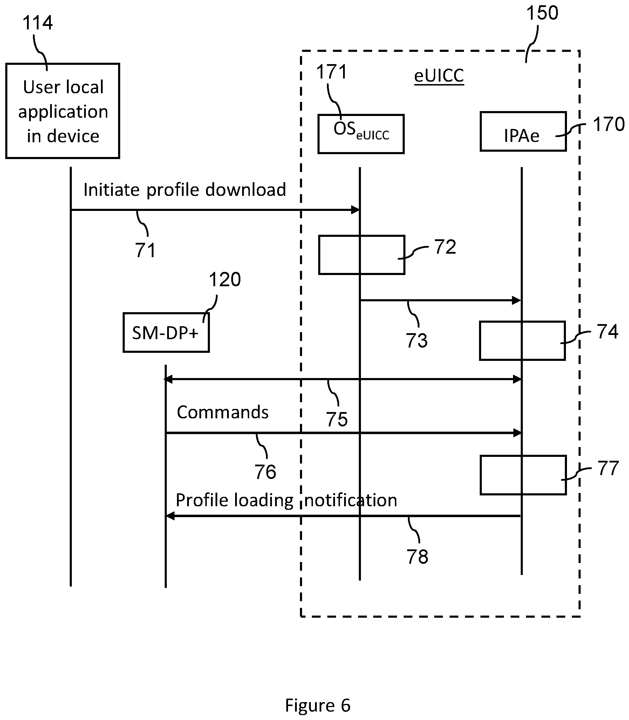

Figure 6 schematically illustrates data flow and steps performed by components of the system in order to load a user-provisioned profile in the database 21. These components are the user local application in device API 114, SM-DP+ 120 and eUICC 150 containing eUICC operating system OS_{eUICC} 171, IPAe 170.

First, API 114 sends an "initiate profile download" command 71 to OS_{eUICC}171. In step 72, OS_{eUICC} 171 updates the value of the context variable with a local context variable value and sends commands 73 to the IPAe 170. IPAe 170 initiates profile download (as per SGP.32), in step 74. During initialization of a secure communication with SM-DP+ 120, messages 75 including cryptographic keys are sent between IPAe 170 and SM-DP+ 120. When the secure communication is set up, SM-DP+ sends commands 76 to IPAe 170. In step 77, IPAe 170 loads a new profile in the database 21, according to OS_{eUICC} 171 updated the value of the context variable. When loading the profile is completed, IPAe 170 sends a profile loading notification 78 to SM-DP+ 120.

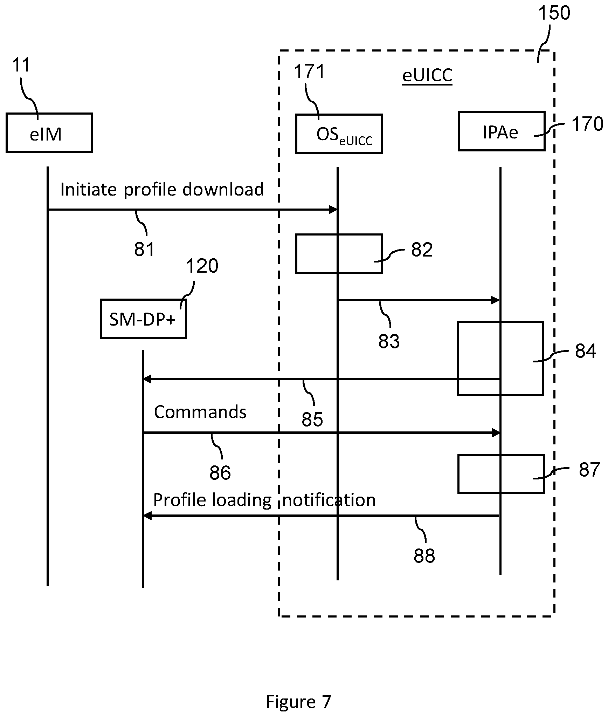

Figure 7 schematically illustrates data flow and steps performed by components of the system in order to load a CMP controlled profile in the database 20. These components are the eSIM loT Remote Manager (elM) 11, SM-DP+ 120 and eUICC 150 containing eUICC operating system OS_{eUICC} 171, IPAe 170.

First, elM 11 sends an "initiate profile download" command 81 to OS_{eUICC} 171. In step 82, OS_{eUICC} 171 updates the value of the context variable with an elM context variable value and sends commands 83 to the IPAe 170. IPAe 170 initiates profile download (as per SGP.32), in step 84. During initialization of a secure communication with SM-DP+ 120, messages 85 including cryptographic keys are sent between IPAe 170 and SM-DP+ 120. When the secure communication is set up, SM-DP+ sends commands 86 to IPAe 170. In step 87, IPAe 170 loads a new profile in the database 20, according to OS_{eUICC} 171 updated the value of the context variable. When loading the profile is completed, IPAe 170 sends a profile loading notification 88 to SM-DP+ 120.

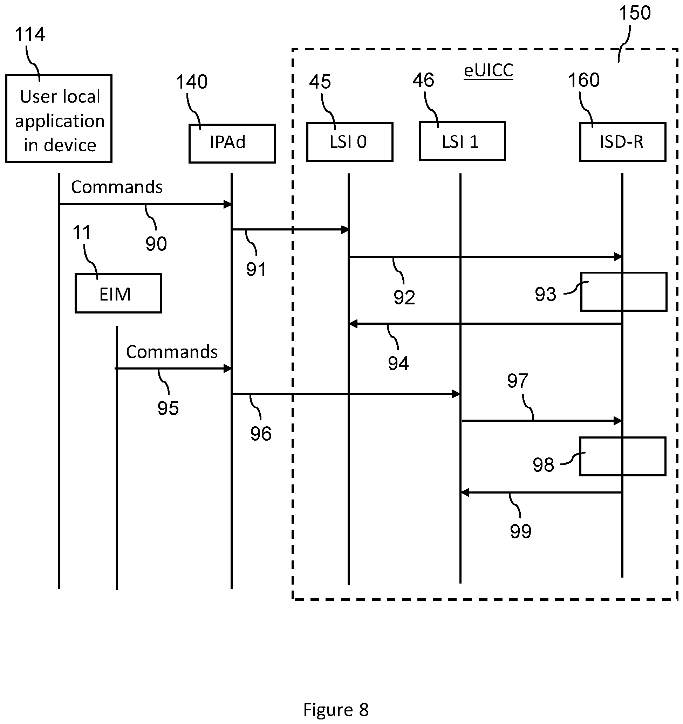

Figure 8 schematically illustrates data flow and steps performed by components of the system in order, for the user local application in device API 114 or the elM 11, to update or read the database 21 or to update or read the database 20. These components are the user local application in device API 114, the IPAd (Internet of things Profile Assistant implemented in the device) 140, LSI0 45, LSI1 46 and ISD-R 160.

If API 114 sends "update consumer database" or "read consumer database" commands 90 to IPAd 140, IPAd 140 sends commands 91 to LSI0 45. Next LSI0 45 sends commands 92 to ISD-R 160. In step 93, ISD-R 160 updates or read database 21 according to the commands it receives and, if applicable, sends back a message 94 comprising, for example, the data read in the database 21 and/or a status related to the execution of the received commands (e.g. update or read command succeed) to the LSI0 45.

If elM 11 sends "update OEM database" or "read OEM database" commands 95 to IPAd 140, IPAd 140 sends commands 96 to LSI1 46, LSI1 46 sends commands 97 to ISD-R 160. In step 98, ISD-R 160 updates or read database 20 according to the commands it receives and, if applicable, sends back a message 99 comprising, for example, the data read in the database 20 and/or a status related to the execution of the received commands (e.g. update or read command succeed) to the LSI1 46.

CMP controlled profiles 18 edition actions are performed as known in the prior art.

User-API controlled profiles 19 edition may be performed by the CMP using third commands as described above or by the user through the user API 114.

In embodiments, at least one edition action performed on a user-API controlled profile 19, particularly its deletion, is notified to the CMP (e.g., the SM-DP+ 120) by means of a message generated by the IPA 140 or 170.

In embodiments, at least one edition action is performed on a user-API controlled profile 19, after reception of a message from the CMP, e.g., the SM-DP+ 120, by the IPA 140 or 170. For example, this message may follow a request sent by the IPA to the CMP. This request may ask if an edition action is to be performed on said profile 19. This request may be sent at regular time intervals by the IPA to the CMP.

As described above, the present invention enables OEMs to manage (for example enable, deleting, disable) their CMP controlled profiles and enables end-users to manage their own user-API controlled profiles using the same device 130 and the same eUICC 150. eUICC 150 differently manages two profile types, i.e., CMP controlled profiles 18 provisioned by the CMP, and User-API controlled profiles 19 controlled by a user through a local user-API 114. Those profiles are managed by two separate entities: CMP controlled profiles 18 through remote server elM 11, and user-API 114 controlled profiles 19 through a local interface 31 or 135.

In the profile database 17, each profile has a property to indicate whether it is a CMP controlled profile 18 or a user-API controlled profile 19.

In embodiments and as shown in Figure 2, dedicated databases 20 and 21 are used for the different profile types.

As described in Figures 4 and 8, ISD-R 160 receives first profile management commands dedicated to user-API controlled profiles 19 and second profile management commands dedicated to CMP controlled profiles 18. To determine the type of profile, a dedicated LSI (Logical Secure Interface) assign to each type, namely LSI0 45 for user-API controlled profiles 19 and LSI1 46 for CMP controlled profiles 18. Consumer commands (first management commands related to manage user-API controlled profiles 19 or parameters linked to the user-API controlled profiles 19 and/or the database 21) are assigned LSI0 45, so that only consumer profiles 19 can be visible and managed and visible through this LSI0 45. Similarly, second management commands related to CMP controlled profiles 18 are assigned LSI1 46, so that only CMP controlled profiles 18 can be managed and visible through this LSI1 46.

However, to allow management of the whole Secure Element (eUICC 150) by the OEM, particular embodiments of the invention allow some third management commands by the elM 11. The third management commands are different from the first and second management commands. Preferably, an indicator is added to identify the allowed third commands, so that the ISD-R 160 will execute the third management commands not taking into account the profile type (CMP controlled or user-API controlled). In particular embodiments, a security mechanism (e.g. PIN, ciphering, authenticate...) is used to protect those kinds of third management commands of unauthorized access.

As described above, one possible implementation is to have an eSIM based on SGP.32. In this case, IPA should be able to identify the command origin. This leads to two possibilities for IPA implementation.

First, in particular embodiments and as shown in Figure 5, IPA may be implemented in the card as IPAe 170. Commands sent to the IPAe 170 may be received via two different transport channels (local ISO command for consumer and Over the Air for OEM). The eUICC Operating System 171 can give visibility to the IPAe 170 on these transport channels through a context variable. The IPAe 170 can therefore proceed the executions of those commands according to this context variable. For profile loading, as shown in Figure 7, loading is performed through a SM-DP+ 120, regardless of the initial command origin. Therefore, to be able to assign the correct property (identifying CMP controlled type profiles or User-API controlled type profiles) to the downloaded profile, the eUICC Operating System 171 (for example via ISD-R 160) stores the initial context variable and assigns accordingly the property to the downloaded profile.

Second, IPA may be implemented in the device as IPAd 140. IPAd 140 receives commands locally or over the air. According to the command original channel, IPAd 140 communicates with the ISD-R 160 on the LSI0 45 for consumer or the LSI1 46 for the OEM. The context for profile download is stored by the eUICC Operating System 171 (for example via ISD-R 160).

In embodiments, embedded user API 114 are used by the device 130 to let end-users provide activation code associated with private subscription. Profile download may be executed by means of Embedded ES9+ 39 function.

In embodiments, and as shown in Figure 2, the profile database 17 in a memory available for profiles is partitioned into two domains: a partition 20 (or CMP controlled profile database 20) for CMP controlled profiles 18 (managed by CMP) and a partition 21 (or user-API controlled profile database 21) for profiles managed by end-user 30. In embodiments, the profile database 17 is configured to store, with each profile, an attribute indicating whether said profile is a user-API controlled profile 19 or a CMP controlled profile 18.

End-user 30 cannot manage profile in the CMP controlled profile database 20. EIM 11 cannot manage profiles in the user-API controlled profile database 21. Size of each domain depends on the selected hardware (HW) platform and its flash memory size. However, as stated above, in other embodiments, to allow management of the whole Secure Element (eUICC 150) by the OEM, particular embodiments of the invention allow some third management commands by the elM 11.

As pointed out above for eUICC 150, IPAd 140 on the device, elM 11 and the SM-DP+ server 120 in the network 112 communicate with each other. As these components come from different companies, standardized protocols (interfaces) are required so that any device with any eUICC 150 can be used in combination with any elM 11 and/or any SM-DP+ 120 server and any mobile network operator MNO 115. The ES9+ interface, an encrypted connection the IPA establishes to the SM-DP+ 150 may be used when the user requires to download a new profile.

Combined with standard MEP function, the present invention emulates not only a plurality of profile types that can be used in parallel but proposes separation of memory domains for storing databases 20 and 21 for profiles of the different types. From modem 145 perspective, this is not visible. End-user 30 can download user-API controlled profiles 19 as with standard eSIM Consumer. ElM 11 also interacts with the eUICC 150 as if it was its own dedicated eSIM. There is no risk that, by mistake or voluntarily, an end-user removes or disables a CMP controlled profile 18. There is no risk that, by mistake or voluntarily, elM 11 disables a user-API controlled profile 19. From GSMA specification perspective, the eSIM implementing the present invention is still a standard eSIM loT, which implies that implementing the present invention has no impact on SM-DP+ 120 side.

As it is apparent from the above description, the device of the invention manages profiles in an eUICC-enabled SIM (eSIM) card having the ability to run over-the-air (OTA) provisioning of multiple network operator MNO 115 profiles from a central management point (CMP), comprising an elM and/or a Subscription Manager Data Preparation enhanced (SM-DP+), and being configured to simultaneously use multiple enabled profiles (MEP). According to the invention, the eUICC 150 is configured to manage two types de profiles, CMP controlled profiles 18 provisioned by the central management point, and user-API controlled profiles 19 controlled by a user through a local user-API 114. The eSIM card stores said profiles in a profile database 17, in a non-volatile memory MEM 175, wherein a profile property and/or a profile position in the profile database 17 represents the profile type. The eUICC 150 has a unique ISD-R 160 configured to receive profile management commands for both types of profiles through:
- a first logical secure interface LSI0 45 dedicated to user-API controlled profiles 19, said first LSI0 45 being configured to identify a user-API controlled profile 19 based on said profile property and/or said profile position in the profile database 17, to provide first management commands dedicated to user-API controlled profiles 19 to the ISD-R 160, or
- a second logical secure interface LSI1 46 dedicated to CMP controlled profiles 18, said second LSI1 46 being configured to identify a CMP controlled profile 18 based on said profile property and/or said profile position in the profile database 17, to provide second management commands dedicated to CMP controlled profiles to the ISD-R 160.

The ISD-R 160 is configured to execute first management commands only on user-API controlled profiles 19 and second management commands, different from the first management commands, only on CMP controlled profiles 18.

In embodiments, the ISD-R 160 is further configured to execute third management commands, different from the first management commands and different from the second management commands, on both user-API controlled profiles 19 and CMP controlled profiles 18. In particular embodiments, the third commands comprise a specific indicator not comprised in the first management commands or in the second management commands, said third commands being sent by an eSIM Remote Manager (elM) to the ISD-R.

These embodiments allow management of the whole Secure Element eUICC 150 by the OEM by allowing some management commands by the eSIM Remote Manager elM 11. To do so, as already mentioned, an indicator is added on the allowed commands, so that the ISD-R 160 executes the command not taking into account the profile property (identifying a CMP controlled profile 18 or a user-API controlled profile 19).

In embodiments, the device further comprises a security mechanism configured to protect the third management commands. The security mechanism may be, for example, PIN code verification, ciphering or authentication, to protect those kinds of management commands of unauthorized access.

In embodiments, eUICC 150 further comprises an internet of things (IoT) Profile Assistant IPA 140 and 170, that is configured to identify a first management command from local interface 114 and a second management command from the central management point 11.

In embodiments, the IPA is implemented in the card IPAe 170 and is configured to identify the first management command or the second management command based on different transport channels associated with the local interface 114 or the central management point 11.

In embodiments, the IPA is implemented in the device IPAd 140 and is configured to identify the first management command or the second management command based on different transport channels associated with the local interface 114 or the central management point 11.

Commands sent to the IPA 140 or 170 may be received via two different transport channels (local ISO command for consumer and Over the Air for OEM). The eUICC Operating System 171 can give visibility to the IPA 140 or 170 on this transport channel through a context variable. The IPA can therefore perform executions of those commands according to this context variable. For profile loading, loading is performed through a Subscription Manager Data Preparation enhanced (SM-DP+) 120, regardless of the initial command origin or channel. Therefore, to be able to assign the right property (OEM type or user-provisioned type) to the downloaded profile, the eUICC Operating System 171 (for example via ISD-R 160) stores the initial context variable and assign accordingly the property to the downloaded profile.

In embodiments, the eUICC 150 is configured to use an embedded ES9+ 39 interface to provide a secure transport for the delivery of a Bound Profile Package between a Subscription Manager Data Preparation enhanced SM-DP+ 120 and the IPAe 170.

In embodiments, eUICC 150 comprises an embedded user API 114 configured to let the user provide an activation code associated with a private subscription.

In embodiments, the eUICC is provided with an endpoint function 37 with Constrained Application Protocol (Coap) support for eIM-IPA (ESipa) interface or HyperText Transfer Protocol secure (HTTPs) support for elM-IPA communication.

In embodiments, the profile database 17 is partitioned into two domains, a first partition (or user-API controlled profile database) 21 for user-API controlled profiles 19 and a second partition (or CMP controlled profile database) 20 for CMP controlled profiles 18.

In embodiments, the profile database 17 is configured to store, with each profile, an attribute indicating whether said profile is a user-API controlled profile 19 or a CMP controlled profile 18.

## Claims

1. A device (130) for managing profiles in an eUICC-enabled SIM (eSIM) card (150) having the ability to run over-the-air (OTA) provisioning of multiple network operator (MNO 115) profiles from a central management point (CMP), including an eSIM Remote Manager (elM 11) and/or a Subscription Manager Data Preparation enhanced (SM-DP+ 120), and being configured to simultaneously use multiple enabled profiles (MEP), **characterized in that**:
- the eUICC is configured to manage two types of profiles, profiles (18) controlled by the CMP, and user-API controlled profiles (19) controlled by a user through a local user-API (114), the eSIM card storing said profiles in a profile memory (17), wherein a profile property and/or a profile position in the profile memory represents the profile type,
- the eUICC has a unique Issuer Security Domain Root (ISD-R 160) configured to receive profile management commands for both types of profiles through:
- a first logical secure interface (LSI0 45) dedicated to user-API controlled profiles, said first LSI being configured to identify a user-API controlled profile based on said user-API controlled profile property and/or said user-API controlled profile position in the profile memory, to provide first management commands (52, 63, 73, 92) dedicated to user-API controlled profiles to the ISD-R, or
- a second logical secure interface (LSI1 46) dedicated to CMP controlled profiles, said second LSI being configured to identify a CMP controlled profile based on said CMP controlled profile property and/or said CMP controlled profile position in the profile memory, to provide second management commands (56, 67, 83, 86, 97) dedicated to CMP controlled profiles to the ISD-R,
- the ISD-R is configured to execute first management commands only on user-API controlled profiles and second management commands, different from the first management commands, only on CMP controlled profiles.

2. A device (130) according to claim 1, wherein the ISD-R (160) is further configured to execute third management commands, different from the first management commands and different from the second management commands, on both user-API controlled profiles and CMP-controlled profiles.

3. A device (130) according to claim 2, wherein the third commands comprise a specific indicator not comprised in the first management commands or in the second management commands, said third commands being sent by an eSIM Remote Manager (elM 11) to the ISD-R (160).

4. A device (130) according to either one of claims 2 or 3, that further comprises a security mechanism configured to protect the third management commands.

5. A device (130) according to any one of claims 1 to 4, wherein the eUICC (150) further comprises an Internet of Things (IoT) Profile Assistant (IPA 140, 170) that is configured to identify the first management command (63, 73) from a local user API (114) and the second management command (67, 83) from the central management point (11).

6. A device (130) according to any one of claims 1 to 5, wherein the eUICC (150) is configured to let the user edit a user-API controlled profile through the user API (114).

7. A device (130) according to claim 5, or claim 6 when it depends on claim 5, wherein the IPA (140, 170) is configured to notify the CMP of at least one of the following edition actions performed on a user-API controlled profile (19): activation, deactivation, deletion or updating.

8. A device (130) according to claim 5 or one of claims 6 or 7 when it depends on claim 5, wherein at least one edition action is performed on a user-API controlled profile (19), after reception of a message from the CMP by the IPA (140, 170).

9. A device (130) according to claim 8, wherein said message follows a request sent by the IPA (140, 170) to the CMP asking if a management action is to be performed on said user-API controlled profile (19).

10. A device (130) according to any one of claims 5, 7, 8 or 9, wherein the eU ICC (150) is configured to use an embedded ES9+ interface (39) to provide a secure transport for the delivery of a Bound Profile Package between a Subscription Manager Data Preparation enhanced (SM-DP+ 120) and the IPA (170).

11. A device (130) according to any one of claims 1 to 10, wherein the eUICC (150) is provided with an endpoint function with Constrained Application Protocol (Coap) support for elM-IPA (ESipa) interface or HyperText Transfer Protocol secure (HTTPs) support for elM-IPA communication.

12. A device according to any one of claims 1 to 11, wherein the profile memory (17) is partitioned into two databases, a first database (20) for CMP controlled profiles (18) and a second database (21) for user-API controlled profiles (19).

13. A device according to any one of claims 1 to 12, wherein the profile memory (17) is configured to store, with each profile, an attribute indicating whether said profile is a user-API controlled profile (19) or a CMP controlled profile (18).

14. A method for managing profiles in an eUICC-enabled SIM (eSIM) card (150) having the ability to run over-the-air (OTA) provisioning of multiple network operator profiles from a central management point (CMP) including an eSIM Remote Manager (elM 11) and/or a Subscription Manager Data Preparation enhanced (SM-DP+ 120), and being configured to simultaneously use multiple enabled profiles (MEP), **characterized in that** it comprises:
- steps in which the eUICC manages CMP controlled profiles (18) provisioned by the central management point,
- steps in which the eUICC manages user-API controlled profiles (19) controlled by a user through a local user-API (114),
the eSIM card storing said profiles in a profile memory (17), wherein a profile property and/or a profile position in the profile memory represents the profile type;
wherein the eUICC has a unique Issuer Security Domain Root (ISD-R 160) that receives profile management commands for both types of profiles through:
- a first logical secure interface (LSI0 45) dedicated to user-API controlled profiles, said first LSI being configured to identify a user-API controlled profile based on said user-API controlled profile property and/or said user-API controlled profile position in the profile memory, to provide first management commands (52, 63, 73, 92) dedicated to user-API controlled profiles to the ISD-R, or
- a second logical secure interface (LSI1 46) dedicated to CMP controlled profiles, said second LSI being configured to identify a CMP controlled profile based on said CMP controlled profile property and/or said CMP controlled profile position in the profile memory, to provide second management commands (56, 67, 83, 86, 97) dedicated to CMP controlled profiles to the ISD-R,
wherein the ISD-R executes first management commands only on user-API controlled profiles and second management commands, different from the first management commands, only on CMP controlled profiles.

15. A method according to claim 14, wherein the ISD-R (160) further executes third management commands, different from the first management commands and different from the second management commands, on both user-API controlled profiles (19) and CMP controlled profiles (18).

16. A method according to claim 15, wherein an eSIM Remote Manager (elM 11) sends third commands to the ISD-R (160), said third commands comprising a specific indicator not comprised in the first management commands or in the second management commands.
